# EUROPÄISCHE PATENTSCHRIFT

(11) **EP 1 086 861 B1**
(45) Veröffentlichungstag und Bekanntmachung des Hinweises auf die Patenterteilung: **29.10.2008**
(21) Anmeldenummer: 00119498.4
(22) Anmeldetag: 18.09.2000
(51) Int. Cl.: B60R 21/16

(54) **Gassack-Schutzeinrichtung**
Airbag protection device
Dispositif de protection à sac gonflable

(30) Priorität: 22.09.1999 DE 29916700 U
(43) Veröffentlichungstag der Anmeldung: 28.03.2001
(73) Patentinhaber: TRW Automotive GmbH, 73553 Alfdorf (DE)
(72) Erfinder: Heigl, Jürgen, 73560 Böbingen (DE); Ritter, Philipp, 73525 Schwäbisch-Gmünd (DE)
(74) Vertreter: Kitzhofer, Thomas

(56) Entgegenhaltungen:
- EP-A- 0 881 130
- WO-A-97/34782
- DE-A- 19 743 626
- US-A- 5 094 477
- US-A- 5 685 347

## Beschreibung

Die Erfindung betrifft eine Gassack-Schutzeinrichtung mit einem großflächigen Seitengassack nach dem Oberbegriff des Anspruchs 1.

Großflächige Seitengassäcke, sogenannte Windowbags haben zwei Gewebelagen, die die Außenwände des Gassacks bilden und die am Umfangsrand und im Bereich von Trennwänden zwischen benachbarten Kammern durch einstückiges Verweben miteinander verbunden sind. Die Belastungen der Fäden im bleibend verwobenen Abschnitt, zum Beispiel im Bereich des Umfangsrandes, sind gerade beim ersten Druckstoß während des Aufblasens sehr hoch. Bei Windowbags wird stets angestrebt, die Gasführung zum schnellen Aufblasen zu optimieren und die Härte des Gassacks an die Umgebungsbedingungen anzupassen.

Bei bekannten Gassäcken wird mit sogenannten Reißnähten gearbeitet, die beim Aufblasen oder Entfalten des Gassacks bewußt zerstört werden. Die Reißnähte sind zum Beispiel aus einem weniger stabilen Faden gebildet, wobei die Reproduzierbarkeit oder Vorherbestimmbarkeit, bei welcher Belastung die Naht reißt, sehr schwer zu erreichen ist. Zudem sind separate Fertigungsschritte, zum Beispiel ein zusätzliches Vernähen, notwendig.

Die gattungsgemäße EP 0 881 130 A2 beschreibt einen aus zwei miteinander verwobenen Gewebelagen gebildeten Seitengassack mit mehreren Kammern. Der Außenrand der Gewebelagen ist ebenfalls durch Verweben gebildet. Hier kann jedoch eine Gasausblasöffnung zum Ausblasen von Gas dadurch gebildet sein, dass die Verwebung unvollständig, mit nur wenigen Fäden, erfolgt. Diese Fäden reißen dann auf.

Aus der US-A-5 094 977 ist ein Front-Gassack bekannt, bei dem eine vordere und hintere Gewebelage durch Verweben miteinander verbunden sind. Im Bereich der aufzublasenden Kammer sind die Gewebelagen auf linienförmigen Abschnitten ebenfalls miteinander verbunden, so dass die beiden Gewebelagen zu Beginn des Aufblasvorgangs auch im Bereich der Kammer miteinander verbunden bleiben. Damit wird die Tiefe des Gassacks anfänglich reduziert. Ab Erreichen eines bestimmten Druckes reißen die durch das Verweben gebildeten Opferfäden, und die Kammer kann auf die maximale Tiefe befüllt werden.

Die WO 97/34 782 A beschreibt einen Seitengassack, der durch eine Gewebelage umgeben ist, die eine Abdeckung bildet, welche beim Entfalten des Gassacks in einem vorgegebenen Bereich zerstört wird.

Die Erfindung schafft eine Gassack-Schutzeinrichtung mit einem großflächigen Seitengassack, bei dem auf einfache und kostengünstige Weise ohne zusätzliche Fertigungsschritte eine schnelle und einfache Anpassung der Gassackgeometrie, der Strömungsverhältnisse innerhalb des Gassacks und eine Herabsetzung der Fadenbelastung in den dauerhaft verwobenen Abschnitten möglich ist. Dies wird durch eine Schutzeinrichtung nach Anspruch 1 gelöst.

Beim erfindungsgemäßen Gassack ist es möglich, durch das einfache und kostengünstige einstückige Verweben die Gewebelagen durch einen oder mehrere Opferfäden in kleinen, punktförmigen oder zum Beispiel auch linienförmigen Bereichen miteinander zu verbinden. Aufgrund des Gassackinnendrucks beim Aufblasen oder beim Eintauchen des Insassen in den Gassack oder bereits beim Entfalten werden die Opferfäden zerstört.

Der Gassack weist zwei gegenüberliegende Gewebelagen auf, die am Umfang des Gassacks miteinander verbunden sind, vorzugsweise durch einstückiges Verweben. Die Gewebelagen begrenzen mehrere mit Gas befüllbare Kammern, wobei sie abschnittsweise einstückig miteinander verwoben sind, zum Beispiel, wie erwähnt, zur Bildung des Umfangsrandes oder zur Bildung von Trennwänden. Mittels des Opferfadens werden die Gewebelagen im Bereich einer aufblasbaren Kammer, d.h. innerhalb des Gassacks, miteinander verbunden.

Der so gebildete zerstörbare Bereich kann für verschiedene Zwecke verwendet werden und dementsprechend an verschiedenen Stellen angeordnet sein.

Eine im Anspruch 1 angegebene Möglichkeit sieht vor, daß eine Kammer durch den Opferfaden abgetrennt wird, die strömungsmäßig später zu befüllen ist als eine benachbarte Kammer. Der Opferfaden trennt die beiden Kammern voneinander. Sobald aber der Druck in der zuerst befüllten Kammer ausreichend hoch ist, reißt der Opferfaden, und das Gas kann in die benachbarte Kammer überströmen. Ein solches Überströmen kann in jedem Fall erfolgen oder zum Beispiel erst bei Erreichen eines Gassackdrucks, der nur durch das Auftreffen des Insassen erzeugt werden kann. In diesem Zusammenhang kann auch in der später zu befüllenden Kammer eine Ausströmöffnung vorhanden sein, die ein Ausströmen des Gases ins Freie ermöglicht. Dies ist insbesondere bei Seitengassäcken, die gasdicht sein sollen und aus diesem Zweck mit einer Folie beschichtet sind, wichtig, damit die Gassäcke nicht zu hart sind.

Das einstückige Verweben erfolgt in der sogenannten Jaquard-Webtechnik.

Eine zweite Möglichkeit der Nutzung der Opferfäden besteht darin, sie als Dämpfung des ersten Druckstoßes vorzusehen, der auf die dauerhaft verwobenen Abschnitte wirkt und dort zu extremen Belastungen der Fäden führt. Wenn die Opferfäden in einem gewissen Abstand vor einem dauerhaft verwobenen Abschnitt liegen, wird die abrupte Belastung des Gewebes in diesem Abschnitt deutlich herabgesetzt.

Eine dritte Möglichkeit der Nutzung der Opferfäden besteht darin, sie zur Gasführung zu verwenden. So können die Opferfäden beispielsweise linienförmig verlaufen und das Gas zu Beginn des Aufblasvorgangs in eine Kammer oder innerhalb einer Kammer in bestimmte Bereiche lenken. Damit kann der Entfaltungs- und Aufblasprozeß auf einfache Weise optimiert werden.

Eine vierte Möglichkeit der Nutzung der Opferfäden besteht zum Beispiel darin, daß nicht der Gassack selbst, sondern eine Gewebelage, die als Abdeckung des Gassacks dient und den Gassack im zusammengefalteten Zustand umgibt und ihn in diesem Zustand hält, durch den Opferfaden zu schließen. Damit ergibt sich eine Hülle, die als Transporthülle oder Einbauhülle verwendet werden kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht einer ersten Ausführungsform des Gassacks nach der erfindungsgemäßen Schutzeinrichtung in Form eines großflächigen ABC-Gassacks,
- Figur 2 eine Seitenansicht eines vorderen Abschnitts eines aufgeblasenen ABC-Gassacks nach der erfindungsgemäßen Schutzeinrichtung gemäß einer zweiten Ausführungsform,
- Figur 3 eine Seitenansicht eines aufgeblasenen ABC-Gassacks der erfindungsgemäßen Schutzeinrichtung gemäß einer dritten Ausführungsform,
- Figur 4 eine vergrößerte Ansicht eines verwobenen Bereichs mit punktuell wirkenden Opferfäden,
- Figur 5 einen vergrößerten Querschnitt durch einen durch einen Opferfaden verwobenen Bereich, und
- Figur 6 einen Ausschnitt eines gefalteten ABC-Gassacks, der von einem Gewebe als Hülle umgeben ist.

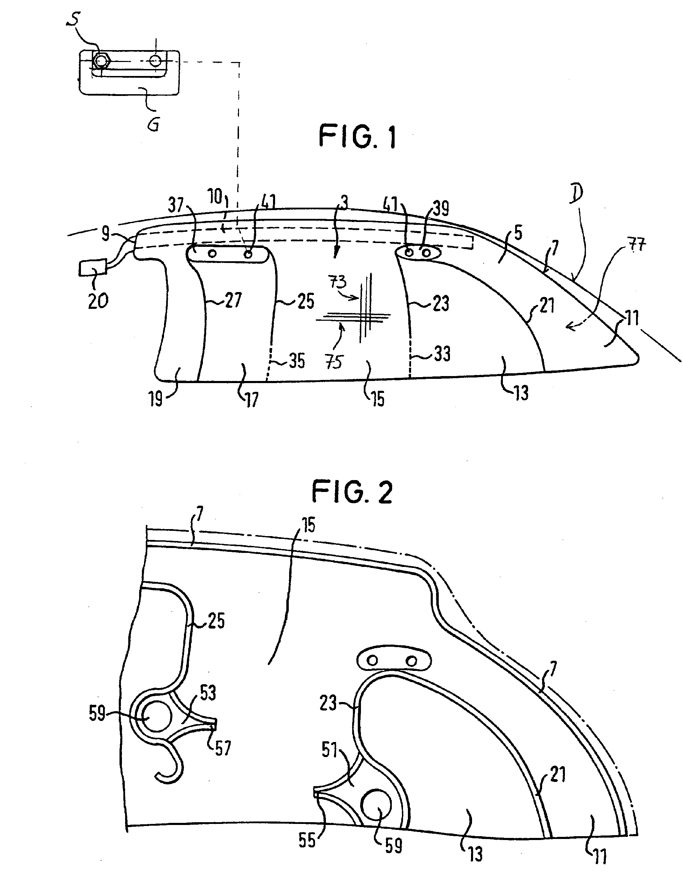

In Figur 1 ist eine Gassack-Schutzeinrichtung mit einem großflächigen ABC-Gassack 3 in aufgeblasenem Zustand dargestellt, der bei einem Unfall die Seitenscheiben eines Fahrzeugs auf einer Fahrzeugseite vollständig abdeckt und als Kopfschutz für die Front- und die Heckinsassen wirkt. Mit D ist der Dachrahmen des Fahrzeugs bezeichnet. Der Gassack 3 besteht aus zwei gegenüberliegenden Gewebelagen, die mit den Bezugszeichen 5 und 77 bezeichnet sind, wobei in Figur 1 die hintere Gewebelage 77 von der vorderen Gewebelage 5 überdeckt ist. Die beiden Gewebelagen sind längs des Umfangsrandes 7 miteinander einstückig verwoben unter Verwendung des Jaquard-Webverfahrens. Die Gewebelagen bestehen jeweils aus Kett- und Schußfäden 73 bzw. 75; die aus Figur 1 ersichtliche Ausrichtung dieser Fäden in Längs- und Hochrichtung des Gassackkörpers ist rein exemplarisch und daher nicht auf die gezeigte beschränkt. Über eine Öffnung 9 am oberen Rand des Gassacks 3 wird eine Gaslanze 10 eingeschoben, die nur mit unterbrochenen Linien dargestellt ist, da sie nicht Teil des Gassacks ist. Über die Gaslanze 10 wird Gas im Bereich des gesamten oberen Randes des Gassacks in diesen eingeleitet. Der Gassack 3 hat mehrere Kammern 11 bis 19, die mit Gas aus einem Gasgenerator 20 befüllt werden. Die Kammern sind voneinander durch Trennwände 21 bis 27 getrennt. Die Trennwände 21 bis 27 stellen keine separaten Teile dar, sondern sind ebenfalls durch einstückiges Verweben der Gewebelagen gebildet.

Die Trennwände 23 und 25 reichen nicht bis zum unteren Rand des aufgeblasenen Gassacks 3, sondern enden mit Abstand von diesem. Sie werden aber jeweils fortgesetzt durch einen linienförmigen, zerstörbaren Bereich 33 bzw. 35, der mit unterbrochenen Linien dargestellt ist und bis zum unteren Rand reicht. Diese zerstörbaren Bereiche 33, 35 bilden eine Art zerstörbare Trennwand. Durch die Trennwände 21, 23, 25, 27 in Verbindung mit den zerstörbaren Bereichen 33 und 35 werden die Kammern 13, 17 strömungsmäßig von den sie umgebenden Kammern getrennt. Sie haben auch keine unmittelbare Strömungsverbindung mit der Gaslanze 10 und bilden daher Kammern, die später als die Kammern 11, 15 und 19 befüllt werden.

Unmittelbar an die Gaslanze 10 angrenzend sind zwei dauerhaft durch einstückiges Verweben dauerhaft miteinander verbundene Abschnitte 37 und 39 vorgesehen, die Durchgangsöffnungen 41 umgeben, die der Durchführung von Befestigungsschrauben S für die Befestigung eines Haltegriffs G dienen, welche am Dachrahmen D befestigt werden. Über diese Befestigungsschrauben wird auch der Gassack an den Dachrahmen geklemmt. In Figur 1 ist so ein Haltegriff in leicht vergrößertem Maßstab dargestellt.

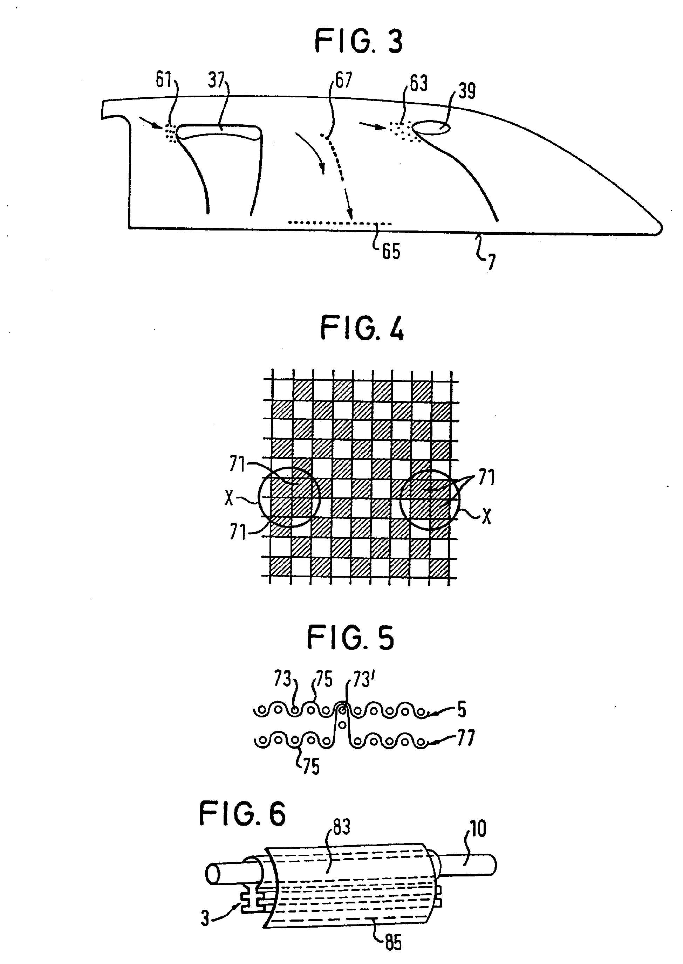

Die zerstörbaren Bereiche 33, 35 werden dadurch gebildet, daß die beiden Gewebelagen in diesem Bereich nur durch sehr wenige Kett- und/oder Schußfäden einstöckig miteinander verwoben sind. Es werden nur so wenig Fäden zur einstückigen Verwebung verwendet, daß diese der Belastung beim Aufblasen des Gassacks durch den Gasgenerator 20 nicht standhalten können und reißen, also Opferfäden bilden. Dies wird anhand der Figuren 4 und 5 später noch genauer erläutert.

Beim Aufblasen des Gassacks strömt über die Gaslanze 10 Gas in das Innere des Gassacks 3 und unmittelbar in die Kammern 11, 15 und 19. Der Gassack wird sich nach unten entfalten, und die Kammern 13, 15 und 19 werden prall mit Gas gefüllt. In der Endphase des Aufblasvorgangs, wenn der Gassack die Entfaltung nach unten vollzogen hat, wird durch eine entsprechende Abstimmung des Gassacks und des Gasgenerators der Druck im Inneren des Gassacks so groß, daß die sogenannten Opferfäden in den zerstörbaren Bereichen 33, 35 reißen. Gas strömt dann über die Kammer 15 in die Kammern 13 und 17, die zeitversetzt befüllt werden.

Die zerstörbaren Bereiche 33, 35 können aber auch eine solche Stabilität haben, daß ihre Opferfäden erst dann zerstört werden, wenn der Maximaldruck im Inneren des Gassacks erreicht wird. Dieser Maximaldruck tritt nicht etwa beim Befüllen des Gassacks auf, sondern erst dann, wenn der Insasse in den Gassack taucht. Dies hat den Vorteil, daß der Gassack vorher prall gefüllt ist und beim Auftreffen des Insassen weich wird und Energie abbaut, so daß die Belastung des Insassen reduziert wird.

Bei der in Figur 2 dargestellten Ausführungsform sind die Bereiche und Teile, die den in Figur 1 dargestellten entsprechen, mit den bereits eingeführten Bezugszeichen versehen. Bei dieser Ausführungsform sind von der Kammer 15 noch zwei kleine Kammern 51, 53 durch linienförmige zerstörbare Bereiche 55, 57 abgetrennt. In den Kammern 51, 53 sind in einer Gewebelage Ausströmöffnungen 59 vorgesehen. Die Kammern 51, 53 werden erst dann geöffnet, wenn der Insasse mit dem Kopf in den Seitengassack taucht und der Innendruck entsprechend hoch ist. Dann strömt Gas in die Kammern 51, 53 ein und über die Öffnungen 59, ins Freie, wodurch der Gassack weicher wird. Gerade bei großflächigen Kopf-Seitengassacksystemen besteht einerseits die Bestrebung, diesen möglichst lange aufgeblasen zu halten, damit er bei einem Fahrzeugüberschlag noch Schutz bieten kann. Auf der anderen Seite soll er nicht zu hart sein, was eigentlich nur dann möglich ist, wenn Gas ausströmen kann. Durch die bedingt freigelegten Ausströmöffnungen 59 besteht eine lange Standzeit des Gassacks, und er wird erst dann weich, wenn er tatsächlich durch den Insassen belastet wird. Vorzugsweise ist der Gassack mit einer Folie auf beiden Außenseiten der Gewebelagen beschichtet, um gasdicht zu sein.

Die Opferfäden können auch, wie in Figur 3 dargestellt ist, unmittelbar vor einem dauerhaft verwobenen Abschnitt, wie dem Abschnitt 37, 39 oder dem Umfangsrand, angeordnet sein, um die hohen Belastungen durch das Auftreffen des ersten Druckstoßes oder das Entfalten in den Fäden des dauerhaft verwobenen Abschnitts zu reduzieren. Die zerstörbaren Bereiche wirken somit als Dämpfung beim Aufblasen und Entfalten. Punktförmige zerstörbare Bereiche 61, 63 sind seitlich der dauerhaft verwobenen Abschnitte 37, 39 angeordnet, und zwar stromaufwärts der Hauptströmungsrichtung (gekennzeichnet durch Pfeile) des aus der Gaslanze ausströmenden Gases, welches unmittelbar auf die dauerhaft verwobenen Abschnitte 37, 39 prallen würde. Darüber hinaus kann zum Beispiel mit geringem Abstand vor dem dauerhaft verwobenen Umfangsrand 7 ein linienförmiger verwobener Bereich 65, zusammengesetzt aus punktförmigen verwobenen Abschnitten, vorgesehen sein, der ebenfalls die abrupte Belastung der Fäden am Umfangsrand 7 herabsetzt, wenn der Gassack vollständig entfaltet und aufgeblasen wird. Ferner können auch zum Beispiel linienförmige, zerstörbare Bereiche 67 mittels der Opferfäden hergestellt werden, die vom Kammereingang bis in die Kammer ragen (vgl. Fig. 3) und ausschließlich der Gasumlenkung dienen und, nach dem ersten Druckstoß, zerstört werden.

In den Figuren 4 und 5 ist die Herstellung der zerstörbaren Bereiche näher zu erkennen. Die Figur 4 zeigt die zeichnerische Darstellung der Bindung der verwendeten Gewebelagen, die sogenannte Bindungspatrone. In den mit X gekennzeichneten Bereichen ist zu erkennen, daß die gleichmäßige Bindung unterbrochen wird, indem punktuell die beiden Gewebelagen durch Opferfäden miteinander verbunden sind. Die Bereiche, die sozusagen eine punktuelle Verbindung darstellen, sind mit dem Bezugszeichen 71 versehen.

In Figur 5 ist die spezielle Verbindung noch näher dargestellt, wobei 73 einen Kettfaden und 75 einen Schußfaden bezeichnet. Die beiden Gewebelagen sind mit dem Bezugszeichen 5 und 77 gekennzeichnet. Die Gewebelagen 5, 77 werden durch einen Schußfaden miteinander verbunden, der in die Gewebelage 5 hineinläuft und einen Kettfaden 73' umschließt, um schließlich wieder in die Gewebelage 77 überzugehen. In diesem Bereich wird eine zerstörbare Verbindung erreicht, und der Schußfaden 77 bildet einen Opferfaden. Genausogut können Kettfäden der Verbindung dienen, wobei hier der Schnitt durch entsprechende Gewebelagen identisch zu dem in Figur 5 dargestellten Schnitt aussieht. Darüber hinaus können natürlich auch Kett- und Schußfäden, die in die gegenüberliegende Gewebelage zur Bildung eines Opferfadens übergehen, sich zu einem zerstörbaren Bereich ergänzen.

Bei der in Figur 6 dargestellten Ausführungsform ist die Gasführungslanze 10 zu erkennen, die von einem Abschnitt des gefalteten Gassacks 3 umgeben ist. Dargestellt ist nur ein Ausschnitt des gesamten gefalteten ABC-Gassacks nach Figur 1.

Gassack 3 und Gaslanze 10 werden von einer dem Gassack 3 zugeordneten Gewebelage 83 umgeben, die umgeschlagen wird und damit eigentlich zwei Gewebelagen bildet. Diese werden an ihrem unteren freien Rand über einen Opferfaden ebenfalls einstückig miteinander verwoben, so daß sich ein linienförmiger Bereich 65 ergibt, der die durch die Gewebelage 83 gebildete Abdeckung schließt. Beim Entfalten des Gassacks 3 wird der Opferfaden dann durch den Gassack 3 zerstört.

Durch die Anzahl und Dichte (Anzahl bezogen auf die Fläche) der punktförmigen Verwebungen 71 durch die Opferfäden kann die Kraft zur Zerstörung der dadurch gebildeten Bereiche sehr genau vorbestimmt und eingestellt werden.

Beim Entfalten des erfindungsgemäßen Gassacks kann zudem die sogenannte Kammerbildung, also eine unerwünschte, schwer lösbare Falte, die das Überströmen verhindert, vermieden werden.

## Patentansprüche

1. Gassack-Schutzeinrichtung mit einem großflächigen Seitengassack, dem zwei gegenüberliegende, abschnittsweise miteinander durch einstückiges Verweben verbundene Gewebelagen (5, 77; 83) zugeordnet sind, die am Umfang (7) des Gassacks (3) miteinander verbunden sind und mit Gas befüllbare Kammern (13 bis 19; 51, 53) begrenzen, wobei die Gewebelagen in einem Bereich (33, 35; 55, 57; 61, 63, 65; 71; 85) durch wenigstens einen Kett- und/oder Schussfaden (73, 75) so einstückig miteinander verwoben werden, dass dieser Faden (73, 75) einen Opferfaden bildet, der im Rückhaltefall reißt, **dadurch gekennzeichnet, dass** wenigstens ein Opferfaden die Gewebelagen (5, 77) im Bereich (33, 35; 55, 57; 61, 63, 65; 71) einer aufblasbaren Kammer (13, 15, 17; 51, 53) miteinander verbindet und eine später zu befüllende Kammer (13, 17; 51, 53) strömungsmäßig von einer früher zu befüllenden Kammer (15) abtrennt.

2. Gassack-Schutzeinrichtung nach Anspruch 1, **dadurch gekennzeichnet, dass** die später zu befüllende Kammer (51, 53) eine Ausströmöffnung (59, 61) aufweist.

3. Gassack-Schutzeinrichtung nach Anspruch 1 oder 2, **dadurch gekennzeichnet, dass** ein Opferfaden vor einem dauerhaft verwobenen Abschnitt (23, 25, 37, 39) und mit Abstand von diesem einen zerstörbaren Bereich (33, 35; 61, 63, 65) definiert.

4. Gassack-Schutzeinrichtung nach Anspruch 3, **dadurch gekennzeichnet, dass** ein zerstörbarer Bereich (61, 63, 65) so angeordnet ist, dass er die unmittelbare Anströmung des dauerhaft verbundenen Bereichs (37, 39) beim Befüllen des Gassacks (3) verhindert.

5. Gassack-Schutzeinrichtung nach einem der vorhergehenden Ansprüche, **dadurch gekennzeichnet, dass** er ein Kopf-Seitengassack ist, der im Bereich der am Dachrahmen befestigten Haltegriffe Durchgangsöffnungen (41) für die Durchführung von Befestigungen der Haltegriffe hat, wobei die Durchgangsöffnungen (41) durch einen dauerhaft einstückig verwobenen Abschnitt (39) umgeben sind, und dass ein durch den Opferfaden gebildeter zerstörbarer Bereich (61, 63) seitlich des die Durchgangsöffnungen (41) umgebenden dauerhaft verwobenen Abschnitts (39) angeordnet ist.

6. Gassack-Schutzeinrichtung nach einem der vorhergehenden Ansprüche, **dadurch gekennzeichnet, dass** ein zerstörbarer Bereich (65) mit geringem Abstand und im wesentlichen parallel zum Umfangsrand (7) des Gassacks (3) oder zur Trennwand (21, 27) zwischen benachbarten Kammern (11 bis 19) verläuft.

7. Gassack-Schutzeinrichtung nach einem der vorhergehenden Ansprüche, **dadurch gekennzeichnet, dass** ein zerstörbarer Bereich (67) linienförmig verläuft und eine Gasumlenkung innerhalb einer großvolumigen Kammer (15) oder am Eingang in die großvolumige Kammer (15) bildet.

8. Gassack-Schutzeinrichtung nach einem der vorhergehenden Ansprüche, **dadurch gekennzeichnet, dass** er in gefaltetem Zustand von einer Gewebelage (63) als Abdeckung umgeben ist, die durch einen beim Entfalten des Gassacks (3) zerstörbaren Bereich (85) geschlossen ist.

## Claims

1. A gas bag protection device comprising a large-area side gas bag, to which two opposing plies of fabric (5, 77; 83) are assigned which are connected to each other in sections by integral interweaving and are connected to each other at the periphery (7) of the gas bag (3) and define chambers (13 to 19; 51, 53) which can be filled with gas, the plies of fabric being integrally interwoven in a portion (33, 35; 55, 57; 61, 63, 65; 71; 85) by at least one warp and/or weft thread (73, 75) in such a manner that this thread (73, 75) forms a sacrificial thread which tears in a restraint situation, **characterized in that** at least one sacrificial thread connects the plies of fabric (5, 77) to each other in the portion (33, 35; 55, 57; 61, 63, 65; 71) of an inflatable chamber (13, 15, 17; 51, 53) and separates, in terms of flow, a chamber (13, 17; 51, 53) to be filled later from a chamber (15) to be filled earlier.

2. The gas bag protection device as set forth in claim 1, **characterized in that** the chamber (51, 53) to be filled later includes an outflow opening (59, 61).

3. The gas bag protection device as set forth in claim 1 or 2, **characterized in that** a sacrificial thread defines a destructible portion (33, 35; 61, 63, 65) upstream of and at a distance from a durably interwoven section (23, 25, 37, 39).

4. The gas bag protection device as set forth in claim 3, **characterized in that** a destructible portion (61, 63, 65) is arranged such that it prevents the direct flow against the durably connected portion (37, 39) when the gas bag (3) is filled.

5. The gas bag protection device as set forth in any of the preceding claims, **characterized in that** it is a head/side gas bag which has through holes (41) in the region of the grab handles secured to the roof frame for the passage of fasteners of the grab handles, the through holes (41) being surrounded by a durably integrally interwoven section (39), and that a destructible portion (61, 63) formed by the sacrificial thread is disposed laterally of the durably interwoven section (39) surrounding the through holes (41).

6. The gas bag protection device as set forth in any of the preceding claims, **characterized in that** a destructible portion (65) extends at a small distance from and substantially parallel to the peripheral edge (7) of the gas bag (3) or to the partition wall (21, 27) between neighboring chambers (11 to 19).

7. The gas bag protection device as set forth in any of the preceding claims, **characterized in that** a destructible portion (67) extends linearly and forms a gas deflection within a large-volume chamber (15) or at the entry to the large-volume chamber (15).

8. The gas bag protection device as set forth in any of the preceding claims, **characterized in that** in the folded condition it is surrounded by a ply of fabric (63) as a cover, which is closed by a portion (85) destructible on deployment of the gas bag (3).

## Revendications

1. Dispositif de protection à coussin à gaz, comportant un coussin à gaz latéral de grande surface, auquel sont associées deux couches de tissu (5, 77 ; 83) opposées, reliées l'une à l'autre par tronçons par tissage d'un seul tenant, qui sont reliées l'une à l'autre sur la périphérie (7) du coussin à gaz (3) et qui délimitent des chambres (13 à 19 ; 51, 53) susceptibles d'être remplies de gaz, les couches de tissu étant tissées de telle sorte l'une avec l'autre d'un seul tenant dans une zone (33, 35 ; 55, 57 ; 61, 63 ; 71 ; 85) par au moins un fil de chaîne et/ou un fil de trame (73, 75) que ce fil (73, 75) forme un fil sacrificiel qui se déchire en cas de retenue, **caractérisé en ce qu'**au moins un fil sacrificiel relie l'une à l'autre les couches de tissu (5, 77) dans la zone (33, 35 ; 55, 57 ; 61, 63 ; 71 ) d'une chambre (13, 15, 17 ; 51, 53) gonflable et sépare du point de vue écoulement une chambre (13, 17 ; 51, 53) à remplir plus tard d'une chambre (15) à remplir plus tôt.

2. Dispositif de protection à coussin à gaz selon la revendication 1, **caractérisé en ce que** la chambre (51, 53) à remplir plus tard présente un orifice d'échappement (59, 61).

3. Dispositif de protection à coussin à gaz selon la revendication 1 ou 2, **caractérisé en ce qu'**un fil sacrificiel définit une zone (33, 35 ; 61, 63, 65) destructible en amont d'un tronçon (23, 25, 37, 39) durablement tissé et à distance de celui-ci.

4. Dispositif de protection à coussin à gaz selon la revendication 3, **caractérisé en ce qu'**une zone (61, 63, 65) destructible est agencée de telle sorte que lors du remplissage du coussin à gaz (3), elle empêche l'écoulement direct contre la zone (37, 39) durablement reliée.

5. Dispositif de protection à coussin à gaz selon l'une des revendications précédentes, **caractérisé en ce qu'**il est un coussin à gaz latéral de tête qui possède, dans la zone des poignées de retenue fixées sur le cadre de toit, des ouvertures de passage (41) pour faire passer des fixations des poignées de retenue, les ouvertures de passage (41) étant entourées par un tronçon (39) durablement tissé d'un seul tenant, et **en ce qu'**une zone (61, 63) destructible formée par le fil sacrificiel est agencée latéralement au tronçon (39) durablement tissé entourant les ouvertures de passage (41).

6. Dispositif de protection à coussin à gaz selon l'une des revendications précédentes, **caractérisé en ce qu'**une zone (65) destructible s'étend à faible distance et sensiblement parallèlement au bord périphérique (7) du coussin à gaz (3) ou à la paroi de séparation (21, 27) entre des chambres (11 à 19) voisines.

7. Dispositif de protection à coussin à gaz selon l'une des revendications précédentes, **caractérisé en ce qu'**une zone (67) destructible s'étend en forme de ligne et forme une déviation de gaz à l'intérieur d'une chambre (15) de grand volume ou à l'entrée dans la chambre (15) de grand volume.

8. Dispositif de protection à coussin à gaz selon l'une des revendications précédentes, **caractérisé en ce qu'**à l'état plié, il est entouré par une couche de tissu (63) faisant office de recouvrement qui est fermée par une zone (85) destructible lors du déploiement du coussin à gaz (3).
